# EUROPEAN PATENT SPECIFICATION

(11) **EP 2 930 438 B1**
(45) Date of publication and mention of the grant of the patent: **27.05.2020**
(21) Application number: 15160996.3
(22) Date of filing: 26.03.2015
(51) Int. Cl.: F24C 15/20, B01D 46/00

(54) **FILTER STRUCTURE DESIGNED FOR A HOOD FOR DOMESTIC USE**
Filterstruktur für eine Dunstabzugshaube für eine Haushaltsumgebung
Structure filtrante pour une hotte aspirante pour un environnement domestique

(30) Priority: 07.04.2014 IT MI20140630
(43) Date of publication of application: 14.10.2015
(73) Proprietor: Elica S.p.A., 60044 Fabriano (Ancona) (IT)
(72) Inventor: Spinaci, Emanuele, 60044 Fabriano (AN) (IT); Cimino, Marco, 64100 Teramo (IT)
(74) Representative: Perani & Partners S.p.A.

(56) References cited:
- EP-A2- 2 695 657
- WO-A1-2007/009039
- US-A- 4 109 676
- US-A1- 2002 083 691

## Description

### Field of the Invention

The present disclosure relates to a filter structure for use in a hood that is preferably designed for domestic use as defined in the preamble of claim 1.

### Discussion of the related art

Extractor and filter hoods for domestic use are known in the art, and are equipped with a structure for supporting one or more filters.

This support structure usually includes a frame which is suitably shaped to retain the filter/s required for filtering the gases emitted during food preparation/cooking against its peripheral edges.

If multiple filters are used for this filtering action, they are arranged one on top of the other in series.

For example, a known arrangement includes first a grease filter, then an odor filter (i.e. an activated charcoal filter), and possibly a Hepa filter.

Thus, the gases extracted by the motor fan unit flow through the series of the above mentioned filters and the food preparation/cooking residues contained therein are conveniently filtered off.

For this purpose, the frame of the support structure includes, for example, a C-shaped section. The filter/s are retained between the two legs of the C shape.

It shall be noted that the distance between the two legs of the C shape can accommodate one or more filters, whose overall thickness will be substantially equal to the height of the C-shape.

In an alternative embodiment, if multiple filters are used, a plurality of support structures are often used, each designed to accommodate its own filter. Here, for example, there will be a structure or the grease filter, a second structure for the odor filter placed above the first structure at a certain distance therefrom, and so on. By this arrangement the hood manufacturer will be afforded more freedom in filter thickness selection.

As is well known in the field of gas-filtering hoods, the filtration capacity and noise are strictly related to the thickness of the filter/s being used. It is also known that improved filtration performance, with a motor fan unit having a given power, can be obtained by increasing the thickness of the filter/s and changing the physical structure (e.g. the type of material being used) to reduce noise.

### Prior art problem

Nevertheless, the above needs are hardly fulfilled because the filter-accommodating thickness is fixed and unchangeable, unless structural changes are made to the filter support.

Namely, in view of improving the performance of a hood having a filter support with a given predetermined available thickness, the filter structure must be replaced with another structure having a greater thickness.

This will increase manufacturing costs, because multiple filter structures must be designed, and will reduce or eliminate the possibility of changing the filtration performance of the hood.

US 2002/0083691, with particular reference to its Figure 2, discloses a filter structure which can house a filter (26) having a first support (211) with a central core and a side wall, and a second support element (27) which is disengaged from the central core of the first support element (211). Particularly, while the second support element (27) is not engaged with the first central core, it engages the filter (26) to the upper surface (210) of the first support element.

Therefore, the filter support of US 2002/0083691 also encounters the problem that the filter-accommodating thickness is fixed and unchangeable, unless structural changes are made to the filter support.

US 4,109,676 discloses a filter support composed of two portions, connected by a screw-threaded metal rod which extends through the filters to assemble the two support portions into a pack and hold them in such positions using clamping pins. The above described structure also encounters the problem that the filter-accommodating thickness is fixed and unchangeable, unless structural changes are made to the filter support.

### SUMMARY OF THE INVENTION

The above described prior art clearly shows that a need is strongly felt by hood manufacturers for a filter structure that obviates the above mentioned problems.

### Advantages of the invention

According to the present invention, this object is fulfilled by a filter structure designed for a hood for domestic use as defined in the features of claim 1.

This object is also fulfilled by a hood comprising a filter structure as defined in claim 10.

The present invention provides a filter structure having an adjustable thickness, its thickness being adjusted to accommodate filters having different thicknesses or structures.

Furthermore, the present invention provides a filter structure that can be more versatile and be more easily adapted to various manufacturing requirements, as it allows the provision of hoods having an improved filtration performance, with the same power of the motor fan unit.

Finally, the present invention provides a filter structure that can be easily removed from the hood. Particularly, when the filter structure of the present invention is removed, all the filters arranged therein can be advantageously accessed at the same time, with a single action. This filter structure considerably facilitates cleaning of the filters, as filter removal is easier for the user.

### BRIEF DESCRIPTION Of THE DRAWINGS

The characteristics and advantages of the present disclosure will appear from the following detailed description of a possible practical embodiment, illustrated as a non-limiting example in the set of drawings, in which:

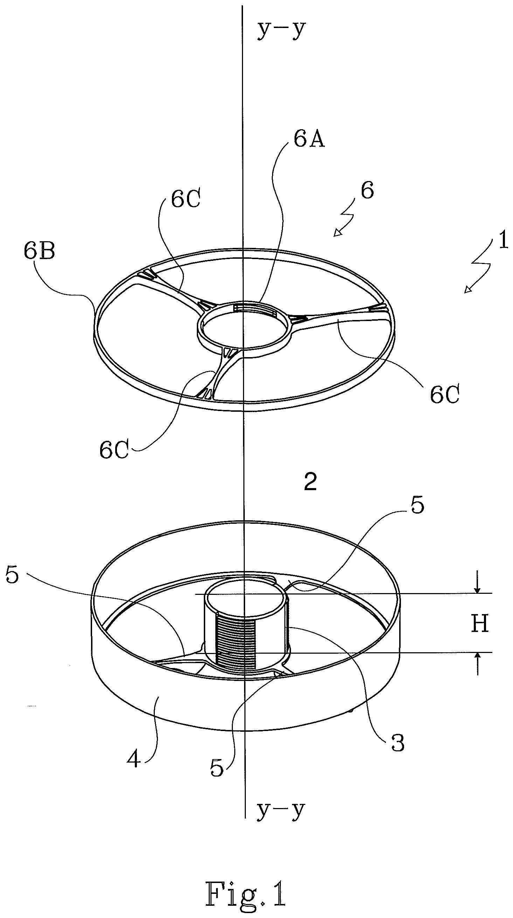

- Figure 1 shows an exploded perspective view of the parts of the filter structure of the present invention;
- Figure 2 shows an exploded perspective view of the parts of the support structure and a plurality of filters that can be accommodated therein according to the present invention;

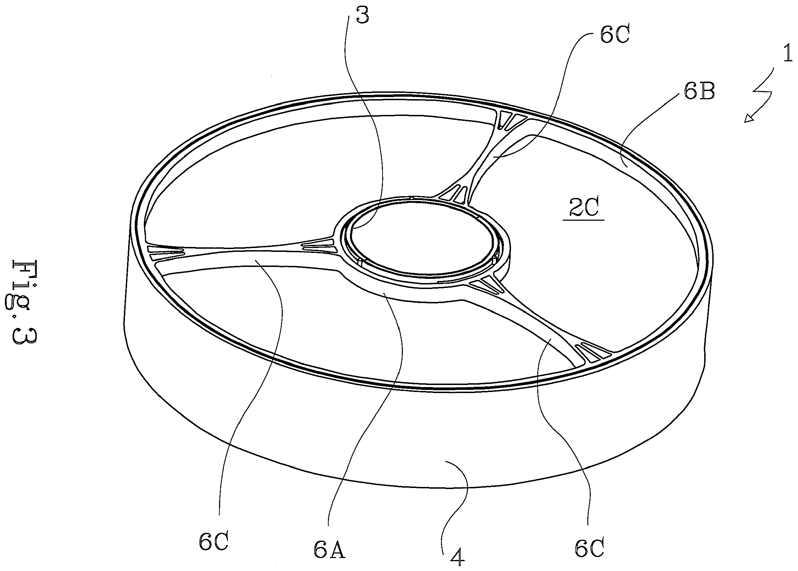

- Figure 3 shows a perspective view of the filter support structure of the present invention;

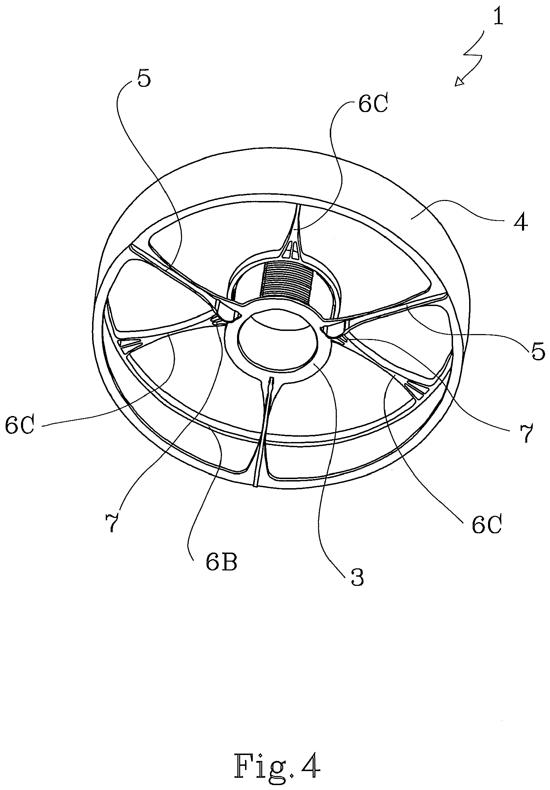

- Figure 4 shows a bottom perspective view of the support structure of Figure 3;

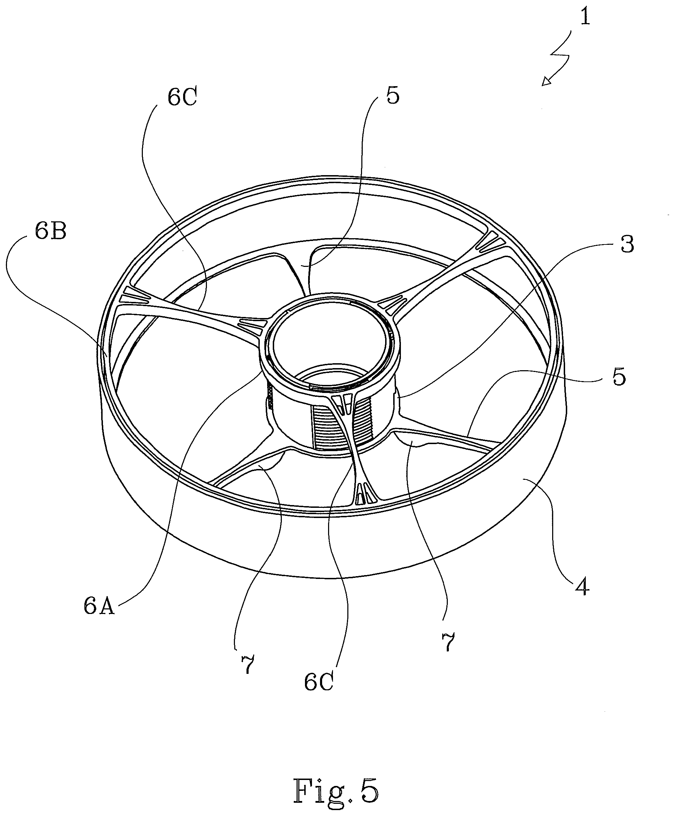

- Figure 5 shows a top perspective view of the support structure of Figure 3.

### DETAILED DESCRIPTION

Referring to the accompanying figures, numeral 1 designates a filter structure for supporting at least one filter 2A, 2B and 2C.

Such filter structure 1 is designed to be housed in a hood for domestic use (not shown in the accompanying figures), comprising a wall which defines a capturing section for the passage of gases moved by a motor fan unit toward a discharge conveyor.

Such hoods are known and will not be described in greater detail hereinafter.

In one aspect, the filter structure 1 is disposed in the capturing section of the hood.

The filter structure 1 comprises first support elements 2 having a first central core 3, a first side wall 4 and first support members 5.

Particularly, the first support members 5 connect the central core 3 to the side wall 4.

In one aspect, the first support members 5 are integrally joined both to the central core 3 and to the side wall 4.

The filter structure 1 further comprises second support elements 6 which are movable relative to the first central core 3 and the first side wall 4.

Particularly, the second support elements 6 are movable from a first position in which such second support elements 6 are disengaged from the first central core 3 and the first side wall and at least one second position in which they engage such first central core 3 and such first side wall 4, and vice versa.

In other words, the second support elements 6 have a first position in which they are not engaged with the first central core 3 and the first side wall 4 and at least one further position, preferably more than one position, in which they engage the first central core 3.

Advantageously, due to the mobility of the second support elements 6 relative to the first central core 3 and the first side wall 4 when the second support elements 6 are engaged with the first central core 3, a distance H is obtained, which can be adjusted according to the thickness S1, S2, S3 of the at least one filter 2A, 2B, 2C in use.

In other words, the distance H between the first support elements 2 and the second support elements 6 may be adjusted by engagement of the first central core 3 with the second support elements 6 such that they can accommodate and retain therebetween the at least one filter 2A, 2B, 2C according to the thickness S1, S2, S3 of the filter.

Therefore, when the thickness S1, S2, S3 of the at least one filter 2A, 2B, 2C has to be increased due to manufacturing requirements, the distance H shall be simply adjusted, such that the new thickness can be accommodated and held between the first support elements 1 and the second support elements 6.

This is even more beneficial when multiple filters 2A, 2B, 2C, e.g. two, three or more filters are used, including:
- a grease filter 2A having a thickness S1 and formed by a flexible or rigid filter element, in which the only absorbing material is a plastic, metal or silicone material having interconnected open cells with a porosity ranging from 10 to 90 ppi;
- an odor filter 2B having a thickness S2 and formed by a charcoal filter;
- a Hepa filter 2C having a thickness S3.

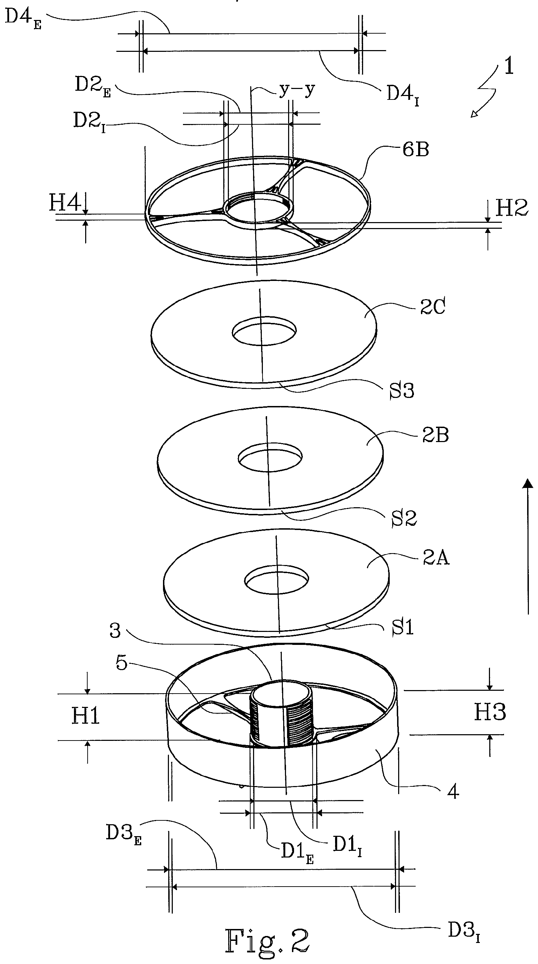

Figure 2 shows a possible arrangement of three filters 2A, 2B, 2C and their orientation relative to gas motion (as shown by an arrow).

With this orientation, gases flow first through the grease filter 2A, then through the odor filter 2B and finally through the Hepa filter 2C.

Here, by adjusting the height H, the filters 2A, 2B, 2C can be accommodated even when one or more of the thicknesses S1, S2, S3 of the filters should be changed to improve the filtration performance of the hood and reduce its noise.

The second support elements 6 of the filter structure 1 comprise a second central core 6A, a second side wall 6B and support members 6C.

Particularly, the support members 6C connect the second central core 6A to the second side wall 6B and are joined to the second central core 6A and to the second side wall 6C.

In one aspect, the second central core 6A is engaged with the first central core 3 when the second support elements 6 are in the at least one second position.

In a preferred embodiment, both the first central core 3 and the second central core 6A extend along a preset direction of extension Y-Y such that the second central core 6A is coaxial with the first central core 3.

Namely:
- the first central core 3 is formed as a preferably hollow tubular element,
- the second central core 6A is formed as a hollow tubular element.

In one aspect:
- the first central core 3 has a height H1, an inside diameter D1I and an outside diameter D1E;
- the second central core 6A has a height H2, an inside diameter D2I and an outside diameter D2E.

Preferably, the height H1 of the first central core 3 is greater than the height H2 of the second central core 6A.

In a preferred embodiment, the second central core 6A is engaged with the first central core 3 by a nut and screw assembly.

Preferably, the nut will be the central core 3 and the screw threads will be formed on the outer surface of the tubular element having the outside diameter D1E.

By this arrangement, the second support elements 6 may assume an operating position (virtually infinite operating positions) relative to the tubular element that forms the first central core 3 and to the first side wall 4.

Namely, this allows the filters 2A, 2B and 2C, with their respective thicknesses S1, S2 and S3, to be retained within the height H (i.e. the height H1) of the first central core 3, since the second support elements will maintain their position, unless they are further tightened or loosened.

Finally, this nut and screw assembly can be used to quickly and simply change the height H between the first support members 5 and the support members 6C (as measured in the direction of extension Y-Y), such that as the the thicknesses of the filters 2A, 2B and 2C are changed, such height H may be also changed by acting upon the engagement of the second central core 6A with the first central core 3.

For this purpose, the hollow tubular element of the second central core 6A has an inside diameter D2I that is greater than the outside diameter D1E of the hollow tubular element of the first central core 3, which will ensure the mobility of the second support elements 6 relative to the first support elements 1.

Preferably, the nut and screw assembly is embodied by a series of crests and troughs formed on the outer surface of the first central core 3 and the inner surface of the second central core 6A. These crests and troughs are defined along a restricted portion of such surfaces, i.e. have a discontinuous profile.

The crests and troughs are in parallel arrangements. Therefore, the second support elements 6 are tightened by rotation of the second central element 6A relative to the first central element 3 through a maximum angle of 90° (as the crests and troughs are discontinuous).

In a preferred aspect, both the first side wall 4 and the second side wall 6B extend along the same preset direction of extension Y-Y of the second central core 6A and the first central core 3, such that the first side wall 4 is coaxial with the second side wall 6B (and hence also coaxial with the first central core 3 and the second central core 6A).

Namely, the first side wall 4 and the second side wall 6B are formed as hollow tubular elements.

In one aspect:
- the first side wall 4 has a height H3, an inside diameter D3I and an outside diameter D3E;
- the second side wall 6B has a height H4, an inside diameter D4I and an outside diameter D4E.

Then preferably:
- the height H3 of the first side wall 4 is greater than the height H4 of the second side wall 6B and
- the outside diameter D4E of the second side wall 6B is smaller than the inside diameter D3I of the first side wall 4, such that the second side wall 6B is slidably engaged relative to the first side wall 4.

It shall be noted that the inside diameter D3I and the outside diameter D3E of the first side wall 4 are greater than the inside diameter D1E of the first central core.

The same applies to the second side wall 6B.

In on aspect, the height H1 is substantially identical to the height H3 ans the height H2 is substantially identical to the height H4.

According to a preferred embodiment, the first support elements 1 and the support members 6C are made of one piece with the first central core 3 and the second central core 6A.

In one aspect, the first support elements 1 are embodied by at least two spokes, preferably three spokes arranged at 120° from each other. The support members 6C are also embodied by at least two spokes, preferably three spokes arranged at 120° from each other.

Preferably, for easy removal of the filter structure 1, each of the first support elements 1 comprises a portion 7 that is appropriately shaped for easy grasp by the fingers of a user.

In an alternative embodiment of the support structure, the central cores 3 and 6A and the side walls 4 and 6B have an elliptical or quadrangular (e.g. square or rectangular), and not circular, plan projection.

Namely, in the case of the elliptical profile, the engagement between the central cores 3 and 6A may achieved by a nut and screw assembly, whereas in the case of the quadrangular profile, the engagement between the central cores 3 and 6A may be a snap fit or bayonet mount.

Those skilled in the art will obviously appreciate that a number of changes and variants may be made to the above described filter structure, to fulfill particular requirements, without departure from the scope of the invention, as defined in the following claims.

## Claims

1. A filter structure (1) designed for a hood for domestic use, comprising:
- at least one filter (2A, 2B, 2C) for filtering the gases that can be extracted by a motor fan unit, each filter f said at least one filter having its own thickness (S1, S2, S3):
- a first support element (2) comprising a first central core (3), a first side wall (4) and first support members (5), which connect said first central core (3) to said side wall (4) and are joined to said first central core (3) and to said first side wall (4);
- second support elements (6) comprising a second central core (6A), a second side wall (6B) and second support members (6C), which connect said second central core (6A) to said second side wall (6B) and are joined to said second central core (6A) and to said second side wall (6B);
- said first central core (3) and second central core (6A) extending in the same direction of extension (Y-Y);
**characterized in that** said second central core (6A) is engaged relative to said first central core (3) to retain said at least one filter (2A, 2B, 2C) between said first and second support members (5, 6C), such that distance (H) between said first support elements (2) and said second support elements (6), in said direction of extension (Y-Y) may be adjusted according to the thickness (S1, S2, S3) of said at least one filter (2A, 2B, 2C).

2. A filter structure as claimed in claim 1, wherein said second central core (6A) is engaged with said first central core (3) by a nut and screw assembly.

3. A filter structure as claimed in claim 1, wherein said second central core (6A) is engaged with said first central core (3) by a series of crests and troughs formed on the outer surface of the first central core (3) and the inner surface of the second central core (6A).

4. A filter structure as claimed in claim 1, wherein said first central core (3) is formed as a tubular element and said second central core (6A) is formed as a hollow tubular element, wherein said tubular element of said first central core (3) has a first height (H1) and said hollow tubular element of said second central core (6A) has a second height (H2), wherein said first height (H1) is greater than said second height (H2).

5. A filter structure as claimed in claim 4, wherein the hollow tubular element of said second central core (6A) has an inner diameter (D2I) that is greater than the outer diameter (D1E) of said first central core (3).

6. A filter structure as claimed in claim 1, wherein said first side wall (4) and said second side wall (6B) are formed as hollow tubular elements and are coaxial with each other.

7. A filter structure as claimed in claim 6, wherein the hollow tubular element of said first side wall (4) has a first height (H3) and the hollow tubular element of said second side wall (6B) has a second height (H4), wherein said height (H3) of said first side wall (4) is greater than the height (H4) of said second side wall (6B).

8. A filter structure as claimed in claim 1, wherein said first support members (5) and said support members (6C) comprise at least two support elements.

9. A filter structure as claimed in any of the preceding claims, wherein said at least one filter (2A, 2B, 2C) comprises a flexible or rigid filter element, wherein the only absorbing material is a plastic, metal or silicone material having interconnected open cells with a porosity ranging from 10 to 90 ppi.

10. A hood for domestic use, comprising a wall which defines a capturing section for the passage of gases moved by a motor fan toward a discharge conveyor, and a filter structure (1) as claimed in any of the preceding claims from 1 to 9, **characterized in that** said filter structure (1) is disposed in said capturing section.

## Patentansprüche

1. Filterstruktur (1), die für eine Dunstabzugshaube für eine Haushaltsumgebung ausgelegt ist, umfassend:
- mindestens einen Filter (2A, 2B, 2C) zum Filtern der Gase, die durch eine Motorgebläseeinheit abgezogen werden können, wobei jeder Filter des mindestens einen Filters seine eigene Stärke (S1, S2, S3) aufweist:
- ein erstes Stützelement (2), umfassend einen ersten zentralen Kern (3), eine erste Seitenwand (4) und erste Stützglieder (5), die den ersten zentralen Kern (3) mit der Seitenwand (4) verbinden und mit dem ersten zentralen Kern (3) und der ersten Seitenwand (4) verbunden sind;
- zweite Stützelemente (6), umfassend einen zweiten zentralen Kern (6A), eine zweite Seitenwand (6B) und zweite Stützglieder (6C), die den zweiten zentralen Kern (6A) mit der zweiten Seitenwand (6B) verbinden und mit dem zweiten zentralen Kern (6A) und mit der zweiten Seitenwand (6B) verbunden sind;
- wobei sich der erste zentrale Kern (3) und der zweite zentrale Kern (6A) in der gleichen Erstreckungsrichtung (Y-Y) erstrecken;
**dadurch gekennzeichnet, dass** der zweite zentrale Kern (6A) relativ mit dem ersten zentralen Kern (3) in Eingriff steht, um den mindestens einen Filter (2A, 2B, 2C) zwischen den ersten und zweiten Stützgliedern (5, 6C) zu halten, so dass der Abstand (H) zwischen den ersten Stützelementen (2) und den zweiten Stützelementen (6) in der Erstreckungsrichtung (Y-Y) entsprechend der Stärke (S1, S2, S3) des mindestens einen Filters (2A, 2B, 2C) eingestellt werden kann.

2. Filterstruktur gemäß Anspruch 1, wobei der zweite zentrale Kern (6A) mit dem ersten zentralen Kern (3) durch eine Mutter und Schrauben-Anordnung verbunden ist.

3. Filterstruktur gemäß Anspruch 1, wobei der zweite zentrale Kern (6A) mit dem ersten zentralen Kern (3) durch eine Reihe von Kämmen und Tälern in Eingriff steht, die auf der Außenfläche des ersten zentralen Kerns (3) und der Innenfläche des zweiten zentralen Kerns (6A) geformt sind.

4. Filterstruktur gemäß Anspruch 1, wobei der erste zentrale Kern (3) als ein rohrförmiges Element geformt ist und der zweite zentrale Kern (6A) als ein hohles rohrförmiges Element geformt ist, wobei das rohrförmige Element des ersten zentralen Kerns (3) eine erste Höhe (H1) aufweist und das hohle rohrförmige Element des zweiten zentralen Kerns (6A) eine zweite Höhe (H2) aufweist, wobei die erste Höhe (H1) größer als die zweite Höhe (H2) ist.

5. Filterstruktur gemäß Anspruch 4, wobei das hohle rohrförmige Element des zweiten zentralen Kerns (6A) einen Innendurchmesser (D2I) aufweist, der größer ist als der Außendurchmesser (D1E) des ersten zentralen Kerns (3).

6. Filterstruktur gemäß Anspruch 1, wobei die erste Seitenwand (4) und die zweite Seitenwand (6B) als hohle rohrförmige Elemente geformt und koaxial zueinander sind.

7. Filterstruktur gemäß Anspruch 6, wobei das hohle rohrförmige Element der ersten Seitenwand (4) eine erste Höhe (H3) und das hohle rohrförmige Element der zweiten Seitenwand (6B) eine zweite Höhe (H4) aufweist, wobei die Höhe (H3) der ersten Seitenwand (4) größer als die Höhe (H4) der zweiten Seitenwand (6B) ist.

8. Filterstruktur gemäß Anspruch 1, wobei die ersten Stützglieder (5) und die Stützglieder (6C) mindestens zwei Stützelemente umfassen.

9. Filterstruktur gemäß einem der vorhergehenden Ansprüche, wobei der mindestens eine Filter (2A, 2B, 2C) ein nachgiebiges oder starres Filterelement umfasst, wobei das einzige absorptionsfähige Material ein Kunststoff-, Metall- oder Silikonmaterial mit offenen, miteinander verbundenen Zellen mit einer Porosität im Bereich von 10 bis 90 ppi ist.

10. Dunstabzugshaube für eine Haushaltsumgebung, umfassend eine Wand, die einen Auffangabschnitt für den Durchgang von Gasen definiert, die von einem Motorgebläse in Richtung eines Austragförderers bewegt werden, und eine Filterstruktur (1) gemäß einem der vorhergehenden Ansprüche 1 bis 9,
**dadurch gekennzeichnet, dass** die Filterstruktur (1) in dem Auffangabschnitt angeordnet ist.

## Revendications

1. Structure de filtration (1) projetée pour une hotte à usage domestique, comprenant :
- au moins un filtre (2A, 2B, 2C) pour filtrer les gaz qui peuvent être extraits par une unité de ventilateur motorisé, chaque filtre dudit au moins un filtre ayant son épaisseur (S1, S2, S3) :
- un premier élément de support (2) comprenant un premier noyau central (3), une première paroi latérale (4) et des premiers composants de support (5), qui relient ledit premier noyau central (3) à ladite paroi latérale (4) et sont unis audit premier noyau central (3) et à ladite première paroi latérale (4) ;
- des deuxièmes éléments de support (6) comprenant un deuxième noyau central (6A), une deuxième paroi latérale (6B) et des deuxièmes composants de support (6C), qui relient ledit deuxième noyau central (6A) à ladite deuxième paroi latérale (6B) et sont unis audit deuxième noyau central (6A) et à ladite deuxième paroi latérale (6B) ;
- lesdits premier noyau central (3) et deuxième noyau central (6A) s'étendant dans la même direction d'extension (Y-Y) ;
**caractérisée en ce que** ledit deuxième noyau central (6A) est mis en prise par rapport audit premier noyau central (3) pour retenir ledit au moins un filtre (2A, 2B, 2C) entre lesdits premiers et deuxièmes composants de support (5, 6C), de sorte que la distance (H) entre lesdits premiers éléments de support (2) et lesdits deuxièmes éléments de support (6), dans ladite direction d'extension (Y-Y), puisse être réglée suivant l'épaisseur (S1, S2, S3) dudit au moins un filtre (2A, 2B, 2C).

2. Structure de filtration selon la revendication 1, dans laquelle ledit deuxième noyau central (6A) est mis en prise avec ledit premier noyau central (3) au moyen d'un ensemble vis-écrou.

3. Structure de filtration selon la revendication 1, dans laquelle ledit deuxième noyau central (6A) est mis en prise avec ledit premier noyau central (3) au moyen d'une série de crêtes et de creux formés sur la surface externe du premier noyau central (3) et sur la surface interne du deuxième noyau central (6A).

4. Structure de filtration selon la revendication 1, dans laquelle ledit premier noyau central (3) est en forme d'élément tubulaire et ledit deuxième noyau central (6A) est en forme d'élément tubulaire creux, dans laquelle ledit élément tubulaire dudit premier noyau central (3) a une première hauteur (H1) et ledit élément tubulaire creux dudit deuxième noyau central (6A) a une deuxième hauteur (H2), dans laquelle ladite première hauteur (H1) est supérieure à ladite deuxième hauteur (H2).

5. Structure de filtration selon la revendication 4, dans laquelle l'élément tubulaire creux dudit deuxième noyau central (6A) a un diamètre interne (D2I) qui est supérieur au diamètre externe (D1E) dudit premier noyau central (3).

6. Structure de filtration selon la revendication 1, dans laquelle ladite première paroi latérale (4) et ladite deuxième paroi latérale (6B) sont en forme d'éléments tubulaires creux et sont coaxiales entre elles.

7. Structure de filtration selon la revendication 6, dans laquelle l'élément tubulaire creux de ladite première paroi latérale (4) a une première hauteur (H3) et l'élément tubulaire creux de ladite deuxième paroi latérale (6B) a une deuxième hauteur (H4), dans laquelle ladite hauteur (H3) de ladite première paroi latérale (4) est supérieure à la hauteur (H4) de ladite deuxième paroi latérale (6B).

8. Structure de filtration selon la revendication 1, dans laquelle lesdits premiers composants de support (5) et lesdits composants de support (6C) comprennent au moins deux éléments de support.

9. Structure de filtration selon l'une quelconque des revendications précédentes, dans laquelle ledit au moins un filtre (2A, 2B, 2C) comprend un élément de filtration flexible ou rigide, dans lequel le seul matériel absorbant est un matériel plastique, métallique ou en silicone ayant des cellules ouvertes interconnectées avec une porosité allant de 10 à 90 ppi.

10. Hotte à usage domestique, comprenant une paroi qui définit une section aspirante pour le passage de gaz déplacée par un ventilateur motorisé vers un convoyeur de décharge, et une structure de filtration (1) selon l'une quelconque des revendications précédentes 1 à 9,
**caractérisée en ce que** ladite structure de filtration (1) est disposée dans ladite section aspirante.
